# EUROPÄISCHE PATENTSCHRIFT

(11) **EP 0 671 288 B1**
(45) Veröffentlichungstag und Bekanntmachung des Hinweises auf die Patenterteilung: **23.07.1997**
(21) Anmeldenummer: 95890018.5
(22) Anmeldetag: 25.01.1995
(51) Int. Cl.: B60C 11/03, B60C 11/12

(54) **Fahrzeugluftreifen**
Vehicle tyre
Bandage pneumatique pour véhicule

(30) Priorität: 25.02.1994 AT 392/94
(43) Veröffentlichungstag der Anmeldung: 13.09.1995
(73) Patentinhaber: Semperit Reifen Aktiengesellschaft, A-2514 Traiskirchen (AT)
(72) Erfinder: Diensthuber, Franz, Ing., A-2544 Schönau (AT)
(74) Vertreter: Vinazzer, Edith, Dipl.-Ing.

(56) Entgegenhaltungen:
- EP-A- 0 420 834
- EP-A- 0 486 838
- EP-A- 0 524 568
- EP-A- 0 578 216
- DE-A- 4 009 432
- US-A- 4 785 863

## Beschreibung

Die Erfindung betrifft einen Fahrzeugluftreifen, insbesondere für den Einsatz unter winterlichen Fahrbedingungen, mit einem Laufstreifenprofil mit in Umfangsrichtung verlaufenden Profilstrukturen, wie Blockreihen oder Laufstreifenbändern, wobei die Profilstrukturen mit einer Vielzahl von Feineinschnitten versehen sind.

Reifen, die für den Fahrbetrieb unter winterlichen Fahrbedingungen besonders geeignet sind, wie beispielsweise der aus der AT-B 390.916 bekannte Reifen, weisen Laufstreifenprofile auf, die sich aus mehreren Profilblockreihen, gegebenenfalls in Kombination mit zumindest einem Laufstreifenband, zusammensetzen. Um diesen Laufstreifenprofilen gute Griffeigenschaften zu verleihen werden die Profilstrukturen mit einer Vielzahl von Lamellenfeineinschnitten versehen, die meist in Profilquerrichtung verlaufend angeordnet sind.

Dabei besitzen Winterreifen durch ihre Strukturierung, insbesondere bei ausgeprägter Blockstruktur, und durch die Vielzahl von Feineinschnitten von der konstruktiven Seite her eine relativ weiche Profilgestaltung. Gleichzeitig trägt auch die Laufstreifenkautschukmischung, die gegenüber der bei reinen Sommerreifen verwendeten Laufstreifenkautschukmischung eine geringere Härte aufweist, ebenfalls zur Weichheit des Laufstreifens bei. Für ein gutes Fahrverhalten ist jedoch eine gewisse Profilsteifigkeit bzw. eine gewisse Steifigkeit der einzelnen Profilstrukturen von Vorteil. Dabei ist insbesondere die Wechselwirkung zwischen der Profilsteifigkeit, die von der jeweiligen Strukturierung des Profiles abhängt, und der relativen Weichheit der Laufstreifenkautschukmischung problematisch und schwer in den Griff zu bekommen.

Es sind ferner Reifen mit Laufstreifenprofilen, die asymmetrisch gestaltet sind, in unterschiedlichen Ausführungsvarianten bekannt und auch Gegenstand von Patenten und Patentanmeldungen. So ist beispielsweise aus der EP-A 0420834 ein Reifen bekannt, der bezüglich der Umfangsmittellinie (Äquatorlinie) asymmetrisch gestaltet ist, wobei jener Profilbereich, der beim montierten Reifen der Fahrzeuglängsachse näher liegt, Profilstrukturen besitzt, die für sich in Reifenumfangsrichtung gleichartige Pitches bilden und der zweite Profilbereich ebenfalls Profilstrukturen aufweist, die gleichartige Pitches bilden. Dabei ist die Gesamtanzahl der Pitches über dem Reifenumfang im Laufstreifeninnenbereich um mindestens 20 % größer als die Gesamtanzahl der Pitches im Laufstreifenaußenbereich. Der Laufstreifenaußenbereich weist ferner eine Positivfläche bzw. Fahrfläche (Anteil an der Gesamtfläche des Profiles, der mit dem Untergrund in Berührung kommt) auf, die größer ist als die Fahrfläche im Laufstreifeninnenbereich. Diese Maßnahme hat günstige Auswirkungen auf das abgestrahlte Reifen/Fahrbahngeräusch, insbesondere auch auf das Vorbeifahrgeräusch, sowie auf das Aquaplaningverhalten. Das Laufstreifenprofil dieses bekannten Reifens eignet sich von seinem Typ her zum Einsatz unter sommerlichen Fahrbedingungen.

Aus der EP-A1-0 524 568 ist ein weiteres, asymmetrisch gestaltetes Laufstreifenprofil für einen Fahrzeugreifen bekannt, welches ebenfalls zwei Laufstreifenbereiche besitzt, die jeweils ein Set von Pitches aufweisen, die sich beispielsweise durch die Gesamtpitchzahl und/oder die Pitchfolge voneinander unterscheiden, wobei die Gesamtpitchzahl im Laufstreifenaußenabschnitt kleiner gewählt werden kann als im Laufstreifeninnenabschnitt. Die beiden angrenzenden Laufstreifenbereiche können unterschiedlich breit ausgeführt sein. Die in dieser Patentanmeldung beschriebenen Maßnahmen sollen vorrangig das Reifen/Fahrbahngeräusch günstig beeinflußen.

Die Erfindung hat sich nun die Aufgabe gestellt, einen Reifen für den Einsatz unter winterlichen Fahrbedingungen zu verbessern, insbesondere Maßnahmen zu treffen, die die Steifigkeit des Gesamtprofiles begünstigen, um vor allem im Fahrverhalten eine Verbesserung gegenüber bekannten Winterreifen zu erreichen.

Gelöst wird die gestellte Aufgabe erfindungsgemäß dadurch, daß das Laufstreifenprofil asymmetrisch gestaltet ist und auf das Fahrzeug bezogen einen Laufstreifeninnenabschnitt und einen Laufstreifenaußenabschnitt umfaßt, deren Trennlinie gegenüber der Umfangsmittellinie zur bei montiertem Reifen dem Fahrzeug abgewandten Außenschulter des Laufstreifenaußenabschnittes versetzt ist, wobei die Profilstrukturen im Laufstreifenaußen- und im Laufstreifeninnenabschnitt jeweils in sich über den Umfang wiederholenden gleichartigen Pitches angeordnet sind, und die Gesamtpitchanzahl im Laufstreifenaußenabschnitt kleiner ist als im Laufstreifeninnenabschnitt, und wobei die Fahrfläche in den beidseitig der Umfangsmittellinie verlaufenden Laufstreifenhälften zumindest im wesentlichen gleich groß ist.

Durch die erfindungsgemäßen Maßnahmen wird ein für den Einsatz unter winterlichen Fahrbedingungen besonders geeigneter Reifen geschaffen, bei dem die Vorteile einer asymmetrischen Profilgestaltung mit unterschiedlichen Gesamtpitchanzahlen im Laufstreifeninnen- und im Laufstreifenaußenabschnitt ausgenützt werden können, wobei gleichzeitig durch den gleichen Fahrflächenanteil in den beiden Laufstreifenhälften dem Gesamtprofil eine ausgewogene Profilsteifigkeit verliehen werden kann, die ein sehr gutes Fahrverhalten bewirkt.

Ein besonders ausgewogenes Fahrverhalten in allen Disziplinen ist dann gegeben, wenn die Fahrfläche in der linken und der rechten Laufstreifenhälfte zwischen 60 und 68 %, insbesondere etwa 65 %, beträgt.

Es ist ferner von Vorteil, wenn die Gesamtanzahl der Feineinschnitte in den im Laufstreifenmittelbereich verlaufenden Profilstrukturen größer ist als die Gesamtanzahl der Feineinschnitte in den in den Laufstreifenschulterbereichen angeordneten Profilstrukturen, wobei im gesamten Laufstreifenprofil der Abstand benachbarter Feineinschnitte zumindest annähernd gleich groß ist.

Nach einem weiteren Merkmal der Erfindung ist die Trennlinie zwischen den zum Laufstreifeninnenabschnitt gehörenden Profilstrukturen und den zum Laufstreifenaußenabschnitt gehörenden Profilstrukturen gegenüber der Umfangsmittellinie um 5 bis 15 % der Breite des Laufstreifens in der Bodenaufstandsfläche versetzt.

Gemäß einer bevorzugten Ausführungsform der Erfindung umfaßt der Laufstreifeninnenabschnitt drei Blockreihen, von welchen die eine entlang der Umgangsmittellinie verläuft und der Laufstreifenaußenabschnitt zwei Blockreihen. Die Blockstruktur des Laufstreifenprofiles begünstigt die Wintereigenschaften, insbesondere die Griffeigenschaften.

Dabei ist es ferner von Vorteil, wenn die Einzelblöcke der beiden zum Laufstreifeninnenabschnitt gehörenden und im Laufstreifenmittelbereich verlaufenden Blockreihen zumindest im wesentlichen parallelogrammförmig gestaltet und derart angeordnet sind, daß ihre einen Blockkanten gegenüber der Umfangsmittellinie unter einem Winkel von insbesondere 5 bis 10° und ihre beiden weiteren Kanten unter einem Winkel zwischen 60 und 80° zur Umgangsmittellinie verlaufen. Diese Blockausgestaltung wirkt sich vor allem günstig auf die Traktion auf schneeigem Untergrund aus. Für die Übertragung von Traktionskräften beim Anfahren bzw. Beschleunigen auf schneeigem oder eisigem Untergrund ist es ferner von Vorteil, wenn die Gesamtanzahl der Feineinschnitte in den mittleren Blockreihen um mindestens 20 %, insbesondere um bis zu 50 % größer ist als die Gesamtanzahl der Feineinschnitte in der Schulterblockreihe im Laufttreifenaußenabschnitt.

Es hat sich ferner als günstig herausgestellt, wenn die in der Innenschulterblockreihe angeordneten Feineinschnitte, in Draufsicht betrachtet, treppen- oder sägezahnförmig gestaltet sind und sich jeweils auf abwechselnd aufeinander folgenden langen und kurzen Einschnittabschnitten zusammensetzen. Es wurde festgestellt, daß es für die Übertragung von Traktionskräften vorrangig von Bedeutung ist, wenn im Laufstreifeninnenbereich ein Typ von Feineinschnitt, wie es bei diesen der Fall ist, angeordnet wird, die sich in Umfangsrichtung öffnen können, wodurch eine größere Anzahl von Griffkanten zur Verfügung gestellt wird.

In diesem Zusammenhang ist es ferner von Vorteil, wenn die kurzen Einschnittabschnitte zumindest im wesentlichen in Reifenumfangsrichtung verlaufen und die langen Einschnittabschnitte zumindest im wesentlichen in Profilquerrichtung verlaufen. Ein guter Öffnungseffekt wird insbesondere dann erzielt, wenn die kurzen Einschnittabschnitte eine Länge besitzen, die zwischen 15 und 40 %, insbesondere etwa 30 %, der Länge der langen Einschnittabschnitte beträgt.

In der Schulterblockreihe im Laufstreifenaußenabschnitt werden bevorzugt wellen oder zick-zack-förmige Feineinschnitte angeordnet, die sich aus einer Aneinanderreihung mehrerer wellen- oder zick-zack-förmigen Strukturen zusammensetzen, die jeweils für sich gesehen zumindest im wesentlichen symmetrisch sind, wobei die Feineinschnitte insgesamt insbesondere zumindest im wesentlichen in Profilquerrichtung verlaufen. Solche Feineinschnitte gewährleisten eine gute Profilsteifigkeit unter Querkraftbeanspruchung, was, wie Versuche mit Reifen bestätigt haben, vor allem im Außenschulterbereich von Vorteil ist. Die Gesamtstabilität des Laufstreifenprofiles wird ferner noch dadurch günstig beeinflußt, wenn in den Profilstrukturen des Laufstreifeninnenabschnittes und den Profilstrukturen des Laufstreifenaußenabschnittes jeweils die gleiche Art von Feineinschnitten angeordnet ist.

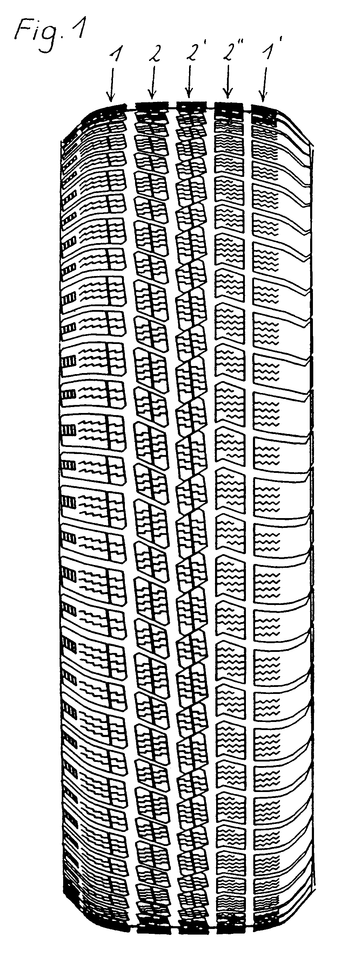

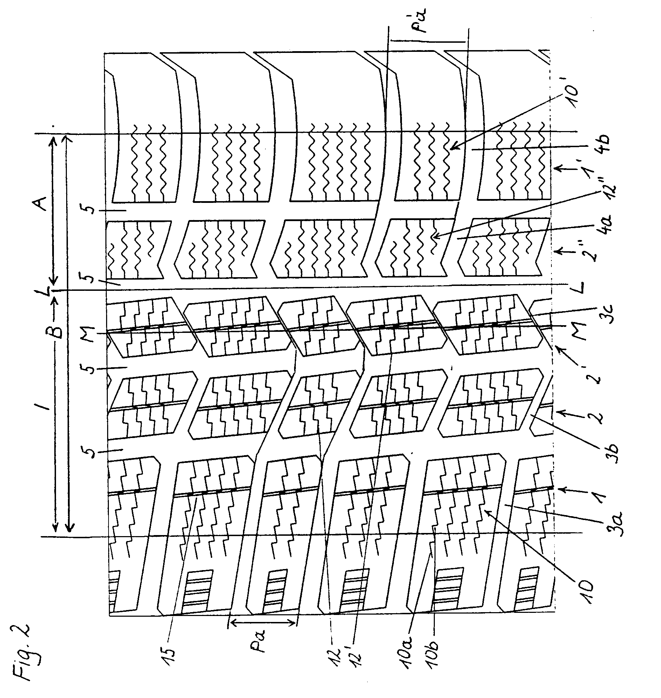

Weitere Merkmale, Vorteile und Einzelheiten der Erfindung werden nun anhand der Zeichnung, die ein Ausführungsbeispiel darstellt, näher beschrieben. Dabei zeigt Fig. 1 eine Frontansicht eines nach der Erfindung gestalteten Reifens und Fig. 2 eine Draufsicht auf eine Teilabwicklung des Laufstreifenprofiles.

Wie aus den beiden Zeichnungsfiguren hervorgeht, besitzt der Reifen gemäß der gegenständlichen Erfindung ein bezüglich der Äquatorlinie M-M asymmetrisches Laufstreifenprofil. Das Laufstreifenprofil setzt sich aus fünf Blockreihen, zwei Schulterblockreihen 1, 1' und drei Mittelblockreihen 2, 2', 2'' zusammen, die durch Umfangsnuten 5 voneinander getrennt sind. Dabei sind die Schulterblockreihen 1, 1' zum Teil außerhalb des bodenberührenden Bereiches des Reifens (Laufstreifenbreite B in Fig. 2 = Breite in der Bodenaufstandsfläche gemäß E.T.R.T.O. Standards) angeordnet.

Die Blöcke der Schulterblockreihe 1 und der beiden Mittelblockreihen 2, 2' sind in Umfangsrichtung durch Quernuten 3a, 3b, 3c, die Blöcke der Schulterblockreihe 1' und der Mittelblockreihe 2'' sind durch Quernuten 4a, 4b voneinander getrennt.

Die Blöcke der Blockreihen 1', 2 und 2' einerseits und die Blöcke der Blockreihen 2'' und 1' andererseits bilden jeweils sich in Umfangsrichtung wiederholende gleichartige Pitches. Im vorliegenden Ausführungsbeispiel verläuft die Trennlinie L-L zwischen den einen und den anderen jeweils gleichartigen Pitches innerhalb der die Blockreihe 2' von der Blockreihe 2'' trennenden Umfangsnut 5. Die Trennlinie L-L ist gegenüber der Umfangsmittellinie M-M zur Außenschulter zu um insbesondere 5 bis 15 % der Breite B versetzt. Der Reifen wird derart am Fahrzeug montiert, daß jener Teil des Laufstreifenprofiles, welcher die Blockreihen 1, 2, 2' umfaßt, der Fahrzeuglängsachse zugekehrt ist (wird als Laufstreifeninnenabschnitt I bezeichnet) jener Teil des Laufstreifenprofiles, der die Blockreihen 1', 2'' umfaßt der Fahrzeugaußenseite zugekehrt ist (wird als Laufstreifenaußenabschnitt A bezeichnet).

Um dominierende Frequenzen im abgestrahlten Reifen/Fahrbahngeräusch zu verhindern und eine Verbreiterung des Frequenzspektrums zu erzielen ist es schon länger üblich, bei Reifenprofilen die Methode der Pitchlängenvariation anzuwenden. Unter dem Begriff Pitch wird dabei ein Profilstrukturelement verstanden, welches sich in der Umfangsrichtung des Laufstreifens gleichartig wiederholt, wobei die Länge in Umfangsrichtung des Reifens als Pitchlänge bezeichnet wird. Im allgemeinen und wie es auch nach dem Stand der Technik seit längerem üblich ist, erfolgt bei der Anordnung von Pitches über den Reifenumfang eine Variation der Pitchlängen, insbesondere derart, daß Pitches in mindestens zwei, vorzugsweise in drei bis fünf, unterschiedlichen Längen gewählt werden, deren Aufeinanderfolge bzw. Anordnung über dem Reifenumfang mittels eines geeigneten Rechenprogrammes ermittelt bzw. optimiert wird.

Im vorliegenden Ausführungsbeispiel beträgt die Gesamtanzahl der Pitches über dem Reifenumfang im Laufstreifeninnenabschnitt I 66 und im Laufstreifenaußenabschnitt A 57. Bei einer Gesamtpitchanzahl, die bei PKW-Reifen im allgemeinen zwischen 40 und 80 Pitches beträgt soll bei dem Reifen gemäß der vorliegenden Erfindung die Gesamtanzahl der Pitches im Laufstrefeninnenabschnitt zwischen 15 und 30 % größer sein als die Gesamtanzahl der Pitches im Laufstreifenaußenabschnitt A. Dabei wird sowohl im Laufstreifeninnenabschnitt I als auch im Laufstreifenaußenabschnitt A jeweils eine Pitchfolge mit mindestens zwei unterschiedlichen Pitchlängen gewählt. Fig. 2 zeigt im Laufstreifeninnenabschnitt I beispielhaft ein Pitch der Länge Pa mit zugehörigen Pitchgrenzen und im Laufstreifenaußenabschnitt A gleichermaßen ein Pitch der Länge P'a. Die Pitchfolgen im Laufstreifeninnen- und Laufstreifenaußenabschnitt I, A sind nicht Gegenstand der vorliegenden Erfindung und werden beispielsweise nach einer der bekannten Methoden rechnerisch ermittelt und optimiert bzw. aufeinander abgestimmt.

Sämtliche Einzelblöcke der Blockreihen 1, 2', 2'', 1' sind jeweils mit einer Anzahl von Feineinschnitten 10, 12, 12', 12'', 10' versehen. Dabei wird unter dem Begriff Feineinschnitt eine sehr schmale Nut mit einer Breite zwischen 0,3 und 0,8 mm, insbesondere etwa 0,5 mm, verstanden. Es ist üblich und gehört zum Stand der Technik, daß Reifen, die vor allem für den Einsatz unter winterlichen Fahrbedingungen geeignet sein sollen, mit einer Vielzahl von Feineinschnitten versehen werden, um gute Griffeigenschaften auf schneeigem oder eisigem Untergrund zu gewährleisten und um eine ausreichende Traktion und ein ausreichendes Bremsvermögen auf solchem Untergrund sicherzustellen.

Dabei wurde im Rahmen der vorliegenden Erfindung festgestellt, daß es günstig ist, wenn zumindest in den beiden Schulterblockreihen 1, 1' unterschiedliche Typen von Feineinschnitten 10, 10' ausgebildet sind. So weisen die Feineinschnitte 10 in den Einzelblöcken der Schulterblockreihe 1, die im Laufstreiteninnenabschnitt I verläuft, eine Treppen- oder Sägezahnform auf, das heißt, jeder Feineinschnitt 10 setzt sich aus abwechselnd aufeinanderfolgenden langen und kurzen Einschnittabschnitten 10a, 10b zusammen, die insgesamt die treppen- oder sägezahnförmige Ausbildung ergeben. Dabei sind die längeren Einschnittabschnitte 10a jene, die zumindest im wesentlichen in Profilquerrichtung (Axialrichtung) verlaufen, die kurzen Einschnittabschnitte 10b verlaufen in Umfangsrichtung bzw. im wesentlichen in Umfangsrichtung. Die kurzen Einschnittabschnitte 10b besitzen eine Länge, die zwischen 15 und 40%, insbesondere etwa 30 %, der Länge der langen Einschnittabschnitte 10a beträgt. Pro Block sind dabei mindestens zwei Feineinschnitte 10 vorgesehen, die günstigerweise in die benachbarte Umfangsnut 5 einmünden und insgesamt im wesentlichen in Reifenquerrichtung, gleichermaßen wie die Orientierung der Einzelblöcke, verlaufen. Die Sägezahn- oder Treppenform hat insbesondere den Vorteil, daß sich diese Feineinschnitte 10 unter Traktionsbeanspruchung sehr gut öffnen können und somit Griffkanten zur Verfügung stehen. Dabei hat sich überraschenderweise herausgestellt, daß das Erzielen dieses Effektes vorrangig an dem dem Fahrzeug zugekehrten Profilbereich des Reifens wesentlich ist.

Hingegen sind die Feineinschnitte 10', die in der Schulterblockreihe 1', die im Laufstreifenaußenabschnitt A verlaufen, wellen- bzw. zick-zack-förmig gestaltet. Die Feineinschnitte 10' bestehen somit aus einer Abfolge von jeweils für sich gesehen zumindest im wesentlichen symmetrischen Wellen- bzw. Zick-Zack-Strukturen. Durch die Zick-Zack- bzw. Wellenform wird ein Abstützungseffekt erzielt, so daß insbesondere unter Querkraftbeanspruchung eine hohe Biegesteifigkeit der Blöcke gewährleistet ist, was insbesondere für das Fahrverhalten bzw. das Handling, vor allem beim Kurvenfahren, wesentlich ist. Dabei hat sich herausgestellt, daß dieser Abstützungseffekt vor allem im Laufstreifenaußenabschnitt A von Bedeutung ist.

Die im Laufstreifenaußenabschnitt A der Schulterblockreihe 1' benachbarte Mittelblockreihe 2'' wird aus diesem Grund bevorzugt ebenfalls mit wellenförmigen Feineinschnitten 12'' versehen. Die Orientierung bzw. Ausrichtung der Feineinschnitte 12'' und 10' erfolgt bevorzugt ebenfalls zumindest im wesentlichen in Reifenquerrichtung und stimmt in diesem Ausführungsbeispiel im großen und ganzen mit der Querorientierung der Einzelblöcke in diesen beiden Blockreihen überein.

In den Mittelblockreihen 2, 2' werden bevorzugt treppen- bzw. sägezahnförmige Feineinschnitte 12, 12' angeordnet, die zum Großteil die Einzelblöcke komplett durchqueren und somit beidseitig in je eine der Umfangsnuten 5 münden.

Aus Geräuschgründen ist es ferner von Vorteil, wenn Feineinschnitte durch gesonderte schmale Nuten entlüftet werden. Solche Entlüftungsnuten 15 sind beim dargestellten Ausführungsbeispiel in den Blockreihen 1, 2, 2' vorgesehen. Die Entlüftungsnuten 15 sind als die Blöcke im wesentlichen in Umfangsrichtung durchquerende Nuten ausgebildet und besitzen eine Tiefe von ca. 2 mm. Selbstverständlich ist es möglich, solche Entlüftungsnuten auch in den beiden weiteren Blockreihen anzuordnen oder pro Block mehr als eine Entlüftungsnut vorzusehen.

Für eine Vergleichmäßigung der Steifigkeit des Gesamtprofiles ist es ferner günstig, wenn der Abstand bzw. die Abstände von in den einzelnen Blöcken benachbarten Feineinschnitten in allen Blöcken möglichst gleich bzw. annähernd gleich gewählt wird.

Es wurde ferner festgestellt, daß sehr ausgewogene und sehr gute Fahrverhaltenseigenschaften und zwar in allen Disziplinen dadurch erzielt werden, wenn in der linken und der rechten Laufstreifenhälfte, bezogen auf die Umfangsmittellinie M-M, gleiche bzw. nahezu gleiche Fahrflächenanteile vorliegen. Dieser-Fahrflächenanteil (Anteil an der Gesamtfläche des Profils, der mit dem Untergrund in Berührung kommt) wird dabei günstigerweise in einem Bereich zwischen 60 und 68 %, insbesondere um 65 %, gewählt. Der Unterschied im Fahrflächenanteil in der linken und der rechten Laufstreifenhälfte sollte 2 % nicht überschreiten.

Die Blöcke in den Mittelblockreihen 2, 2' sind ferner im wesentlichen parallelogrammförmig gestaltet und derart angeordnet, daß die einen Blockkanten gegenüber der Umfangsmittellinie M-M geringfügig, vorzugsweise unter einem Winkel zwischen 5 und 10°, schräggestellt sind und die beiden weiteren Kanten unter einem Winkel zwischen 60 und 80° relativ zur Umfangsmittellinie M-M verlaufen. Die Richtung der Schrägstellung ist dabei, insbesondere für ein Laufstreifenprofil, welches nicht laufrichtungsgebunden ist, wie es hier der Fall ist, unerheblich. Diese geschilderte besondere Stellung der Blöcke in diesen Mittelblockreihen 2, 2' wirkt sich günstig auf die Traktion auf schneeigem Untergrund aus. Ein weiterer Vorteil dieser Schrägstellung besteht darin, daß insbesondere in diesen Blockreihen unter Einhaltung des geschilderten gleichmäßigen Feineinschnittabstandes und durch Orientierung der Feineinschnitte 12, 12' in Gegenwinkelung zu jenen Blockkanten, die die Quernuten 3b, 3c begrenzen eine größere Anzahl von Feineinschnitten untergebracht werden kann, als in den beiden Schulterblockreihen. Dabei ist beispielsweise die Gesamtanzahl der Feineinschnitte 12, 12' in den Mittelblockreihen 2, 2' um mindestens 20 %, insbesondere um bis zu 50 % größer als die Gesamtanzahl der Feineinschnitte in der Schulterblockreihe 1' im Laufstreifenabschnitt A. Diese Maßnahme verbessert die Griffeigenschaften des Reifens unter winterlichen Fahrbedingungen, insbesondere beim Anfahren und Beschleunigen.

Die Erfindung ist auf das dargestellte Ausführungsbeispiel nicht eingeschränkt. So ist es insbesondere möglich, anstelle von Blockreihen, vor allem im Laufstreifenmittelbereich, Laufstreifenbänder vorzusehen, die beispielsweise mit sackförmig endenden Nuten versehen sein können oder als zumindest im wesentlichen durchgehende Laufstreifenbänder mit entsprechender Anzahl und Ausbildung von Feineinschnitten versehen sind.

## Patentansprüche

1. Fahrzeugluftreifen, insbesondere für den Einsatz unter winterlichen Fahrbedingungen, mit einem Laufstreifenprofil mit in Umfangsrichtung verlaufenden Profilstrukturen, wie Blockreihen (1,1 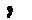 ; 2,2 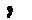 ,2 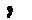 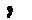 )oder Laufstreifenbändern, wobei die Profilstrukturen mit einer Vielzahl von Feineinschnitten (10,10'; 12,12'12' 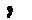 ) versehen sind, dadurch gekennzeichnet, daß das Laufstreifenprofil asymmetrisch gestaltet ist und auf das Fahrzeug bezogen einen Laufstreifeninnenabschnitt (I) und einen Laufstreifenaußenabschnitt (A) umfaßt, deren Trennlinie (L-L) gegenüber der Umfangsmittellinie (M-M) zur bei montiertem Reifen dem Fahrzeug abgewandten Außenschulter des Laufstreifenaußenabschnittes (A) versetzt ist, wobei die Profilstrukturen im Laufstreifenaußen- und im Laufstreifeninnenabschnitt (A, I) jeweils in sich über den Umfang wiederholenden gleichartigen Pitches angeordnet sind, und die Gesamtpitchanzahl im Laufstreifenaußenabschnitt (A) kleiner ist als im Laufstreifeninnenabschnitt (I), und wobei die Fahrfläche in den beidseitig der Umfangsmittellinie (M-M) verlaufenden Laufstreifenhälften zumindest im wesentlichen gleich groß ist.

2. Fahrzeugluftreifen nach Anspruch 1, dadurch gekennzeichnet, daß die Fahrfläche in der linken und der rechten Laufstreifenhälfte zwischen 60 und 68 %, insbesondere etwa 65 %, beträgt.

3. Fahrzeugluftreifen nach Anspruch 1 oder Anspruch 2, dadurch gekennzeichnet, daß die Gesamtanzahl der Feineinschnitte (12, 12', 12'') in den im Laufstreifenmittelbereich verlaufenden Profilstrukturen größer ist als die Gesamtanzahl der Feineinschnitte (10, 10') in den in den Laufstreifenschulterbereichen angeordneten Profilstrukturen, wobei im gesamten Laufstreifenprofil der Abstand benachbarter Feineinschnitte (10, 10', 12, 12', 12'') zumindest annähernd gleich groß ist.

4. Fahrzeugluftreifen nach einem der Ansprüche 1 bis 3, dadurch gekennzeichnet, daß die Trennlinie (L-L) zwischen den zum Laufstreifeninnenabschnitt (I) gehörenden Profilstrukturen und den zum Laufstreifenaußenabschnitt (A) gehörenden Profilstrukturen gegenüber der Umfangsmittellinie (M-M) um 5 bis 15 % der Breite des Laufstreifens in der Bodenaufstandsfläche versetzt ist.

5. Fahrzeugluftreifen nach einem der Ansprüche 1 bis 4, dadurch gekennzeichnet, daß der Laufstreifeninnenabschnitt (I) drei Blockreihen (1, 2, 2'), von welchen die eine entlang der Umgangsmittellinie (M-M) verläuft und der Laufstreifenaußenabschnitt (A) zwei Blockreihen (2'', 1') umfaßt.

6. Fahrzeugluftreifen nach einem der Ansprüche 1 bis 5, dadurch gekennzeichnet, daß die Einzelblöcke der beiden zum Laufstreifeninnenabschnitt (I) gehörenden und im Laufstreifenmittelbereich verlaufenden Blockreihen (2, 2') zumindest im wesentlichen parallelogrammförmig gestaltet und derart angeordnet sind, daß ihre einen Blockkanten gegenüber der Umfangsmittellinie (M-M) unter einem Winkel von insbesondere 5 bis 10° und ihre beiden weiteren Kanten unter einem Winkel zwischen 60 und 80° zur Umgangsmittellinie (M-M) verlaufen.

7. Fahrzeugluftreifen nach einem der Ansprüche 1 bis 6, dadurch gekennzeichnet, daß die Gesamtanzahl der Feineinschnitte (12, 12', 12'') in den mittleren Blockreihen (2, 2', 2'') um mindestens 20 %, insbesondere um bis zu 50 % größer ist als die Gesamtanzahl der Feineinschnitte (10') in der Schulterblockreihe (1') im Laufstreifenaußenabschnitt (A).

8. Fahrzeugluftreifen nach einem der Ansprüche 1 bis 7, dadurch gekennzeichnet, daß die in der Innenschulterblockreihe (1) angeordneten Feineinschnitte (10), in Draufsicht betrachtet, treppen- oder sägezahnförmig gestaltet sind und sich jeweils aus abwechselnd aufeinander folgenden langen und kurzen Einschnittabschnitten (10a, 10b) zusammensetzen.

9. Fahrzeugluftreifen nach einem der Ansprüche 1 bis 8, dadurch gekennzeichnet, daß die kurzen Einschnittabschnitte (10b) zumindest im wesentlichen in Reifenumfangsrichtung verlaufen und die langen Einschnittabschnitte (10a) zumindest im wesentlichen in Profilquerrichtung verlaufen.

10. Fahrzeugluftreifen nach Anspruch 8 oder Anspruch 9, dadurch gekennzeichnet, daß die kurzen Einschnittabschnitte (10b) eine Länge besitzen, die zwischen 15 und 40 %, insbesondere etwa 30 %, der Länge der langen Einschnittabschnitte (10a) beträgt.

11. Fahrzeugluftreifen nach einem der Ansprüche 1 bis 6, dadurch gekennzeichnet, daß in der Schulterblockreihe (1') im Laufstreifenaußenabschnitt (A) bevorzugt wellen- oder zick-zack-förmige Feineinschnitte (10') angeordnet sind, die sich aus einer Aneinanderreihung mehrerer wellen- oder zick-zack-förmigen Strukturen zusammensetzen, die jeweils für sich gesehen zumindest im wesentlichen symmetrisch sind, wobei die Feineinschnitte insgesamt insbesondere zumindest im wesentlichen in Profilquerrichtung verlaufen.

12. Fahrzeugluftreifen nach einem der Ansprüche 1 bis 11, dadurch gekennzeichnet, daß in den Profilstrukturen des Laufstreifeninnenabschnittes (I) und den Profilstrukturen des Laufstreifenaußenabschnittes (A) jeweils die gleiche Art von Feineinschnitten angeordnet ist.

## Claims

1. Pneumatic vehicle tyre, more especially for use in wintry travel conditions, having a tread strip profile provided with profile structures which extend in the circumferential direction, such as rows of blocks (1,1';2,2',2'') or tread strip bands, the profile structures being provided with a plurality of fine incisions (10,10';12,12',12''), characterised in that the tread strip profile has an asymmetrical configuration and, relative to the vehicle, includes an internal tread strip portion (I) and an external tread strip portion (A), the parting line (L-L) between said portions being offset relative to the circumferential centre line (M-M) in respect of the external shoulder of the external tread strip portion (A) remote from the vehicle when the tyre is assembled, the profile structures in the external tread strip portion (A) and in the internal tread strip portion (I) each being disposed in similar pitches which are repeated over the circumference, and the total pitch number in the external tread strip portion (A) is smaller than in the internal tread strip portion (I), and the travel surface in the tread strip halves, which extend on each side of the circumferential centre line (M-M), having at least substantially the same dimensions.

2. Pneumatic vehicle tyre according to claim 1, characterised in that the travel surface in the left tread strip half and in the right tread strip half is between 60 % and 68 %, more especially about 65 %.

3. Pneumatic vehicle tyre according to claim 1 or claim 2, characterised in that the total number of fine incisions (12,12',12'') in the profile structures extending in the central tread strip region is greater than the total number of fine incisions (10,10') in the profile structures disposed in the tread strip shoulder regions, the spacings between adjacent fine incisions (10,10',12,12',12'') having at least approximately the same dimensions in the entire tread strip profile.

4. Pneumatic vehicle tyre according to one of claims 1 to 3, characterised in that the parting line (L-L) between the profile structures belonging to the internal tread strip portion (I) and the profile structures belonging to the external tread strip portion (A) is offset relative to the circumferential centre line (M-M) by between 5 % and 15 % of the width of the tread strip in the ground engaging surface.

5. Pneumatic vehicle tyre according to one of claims 1 to 4, characterised in that the internal tread strip portion (I) includes three rows of blocks (1,2,2'), of which one extends along the circumferential centre line (M-M), and the external tread strip portion (A) includes two rows of blocks (2'',1').

6. Pneumatic vehicle tyre according to one of claims 1 to 5, characterised in that the individual blocks of the two rows of blocks (2,2'), which belong to the internal tread strip portion (I) and extend in the central tread strip region, have at least a substantially parallelogram-shaped configuration and are disposed in such a manner that one of their block edges extends at an angle of more especially between 5° and 10° relative to the circumferential centre line (M-M), and their other two edges extend at an angle of between 60° and 80° relative to the circumferential centre line (M-M).

7. Pneumatic vehicle tyre according to one of claims 1 to 6, characterised in that the total number of fine incisions (12,12',12'') in the central rows of blocks (2,2',2'') is greater by at least 20 %, more especially by up to 50 %, than the total number of fine incisions (10') in the row of shoulder blocks (1') in the external tread strip portion (A).

8. Pneumatic vehicle tyre according to one of claims 1 to 7, characterised in that the fine incisions (10), disposed in the internal row of shoulder blocks (1), have a step-like or sawtooth-like configuration when viewed from above, and each fine incision comprises alternately successive long and short incision portions (10a,10b).

9. Pneumatic vehicle tyre according to one of claims 1 to 8, characterised in that the short incision portions (10b) extend at least substantially in the circumferential direction of the tyre, and the long incision portions (10a) extend at least substantially in the transverse direction of the profile.

10. Pneumatic vehicle tyre according to claim 8 or claim 9, characterised in that the short incision portions (10b) have a length which is between 15 % and 40 %, more especially about 30 %, of the length of the long incision portions (10a).

11. Pneumatic vehicle tyre according to one of claims 1 to 6, characterised in that preferably undulatory or zigzag-shaped fine incisions (10') are disposed in the row of shoulder blocks (1') in the external tread strip portion (A) and comprise a series arrangement of a plurality of undulatory or zigzag-shaped structures which, when viewed on their own, are at least substantially symmetrical, all of the fine incisions extending more especially at least substantially in the transverse direction of the profile.

12. Pneumatic vehicle tyre according to one of claims 1 to 11, characterised in that the same type of fine incision is disposed in the profile structures of the internal tread strip portion (I) and in the profile structures of the external tread strip portion (A).

## Revendications

1. Bandage pneumatique pour véhicule, notamment destiné à l'utilisation dans des conditions de déplacement hivernales, comportant un profil de bande de roulement muni de structures profilées s'étendant dans le sens périphérique, telles que des rangées de blocs (1, 1' ; 2, 2', 2'') ou des rubans de bande de roulement, les structures profilées étant dotées d'un grand nombre de minces entailles (10, 10' ; 12, 12', 12''), caractérisé par le fait que le profil de la bande de roulement est de configuration asymétrique et comprend, par rapport au véhicule, une région intérieure (I) de bande de roulement et une région extérieure (A) de bande de roulement, dont la ligne de séparation (L-L) est décalée par rapport à la ligne médiane circonférentielle (M-M), vis-à-vis de l'épaulement extérieur de la région extérieure (A) de bande de roulement qui est tourné à l'opposé du véhicule à l'état monté du pneumatique ; les structures profilées étant respectivement agencées, dans les régions extérieure et intérieure (A, I) de bande de roulement, selon des pas similaires se répétant sur le pourtour, et le nombre total de pas étant plus petit, dans la région extérieure (A) de bande de roulement, que dans la région intérieure (I) de bande de roulement ; et la surface de roulement étant au moins pour l'essentiel identique dans les moitiés de la bande de roulement s'étendant de part et d'autre de la ligne médiane circonférentielle (M-M).

2. Bandage pneumatique pour véhicule, selon la revendication 1, caractérisé par le fait que la surface de roulement est comprise entre 60 et 68 % et représente, notamment, environ 65 % dans les moitiés de gauche et de droite de la bande de roulement.

3. Bandage pneumatique pour véhicule, selon la revendication 1 ou la revendication 2, caractérisé par le fait que le nombre total des minces entailles (12, 12', 12'') est plus grand, dans les structures profilées s'étendant dans la région centrale de la bande de roulement, que le nombre total des minces entailles (10, 10') dans les structures profilées situées dans les zones des épaulements de la bande de roulement, l'espacement de minces entailles voisines (10, 10', 12, 12', 12'') étant au moins approximativement identique dans tout le profil de la bande de roulement.

4. Bandage pneumatique pour véhicule, selon l'une des revendications 1 à 3, caractérisé par le fait que la ligne de séparation (L-L), entre les structures profilées faisant partie de la région intérieure (I) de bande de roulement et les structures profilées faisant partie de la région extérieure (A) de bande de roulement, est décalée, par rapport à la ligne médiane circonférentielle (M-M), de 5 à 15 % de la largeur de la bande de roulement dans la surface de contact avec le sol.

5. Bandage pneumatique pour véhicule, selon l'une des revendications 1 à 4, caractérisé par le fait que la région intérieure (I) de bande de roulement comprend trois rangées de blocs (1, 2, 2') dont l'une s'étend le long de la ligne médiane circonférentielle (M-M), et la région extérieure (A) de bande de roulement comprend deux rangées de blocs (2'', 1').

6. Bandage pneumatique pour véhicule, selon l'une des revendications 1 à 5, caractérisé par le fait que les blocs individuels des deux rangées de blocs (2, 2') faisant partie de la région intérieure (I) de bande de roulement, et s'étendant dans la région centrale de la bande de roulement, revêtent au moins pour l'essentiel la forme de parallélogrammes et sont agencés de telle sorte que les unes de leurs arêtes s'étendent selon un angle mesurant notamment de 5 à 10° par rapport à la ligne médiane circonférentielle (M-M), et que leurs deux autres arêtes s'étendent selon un angle compris entre 60 et 80° par rapport à ladite ligne médiane circonférentielle (M-M).

7. Bandage pneumatique pour véhicule, selon l'une des revendications 1 à 6, caractérisé par le fait que le nombre total des minces entailles (12, 12', 12'') situées dans les rangées de blocs centrales (2, 2', 2'') excède d'au moins 20 %, notamment jusqu'à 50 % le nombre total des minces entailles (10') situées dans la rangée de blocs d'épaulement (1'), dans la région extérieure (A) de bande de roulement.

8. Bandage pneumatique pour véhicule, selon l'une des revendications 1 à 7, caractérisé par le fait que les minces entailles (10), situées dans la rangée de blocs d'épaulement intérieur (1), sont de configuration en gradins ou en dents de scie observées en plan, et se composent à chaque fois de segments d'entailles (10a, 10b) longs et courts, se succédant en alternance.

9. Bandage pneumatique pour véhicule, selon l'une des revendications 1 à 8, caractérisé par le fait que les courts segments d'entailles (10b) s'étendent au moins pour l'essentiel dans la direction du pourtour du pneumatique, et les segments d'entailles longs (10a) s'étendent au moins pour l'essentiel dans la direction transversale du profil.

10. Bandage pneumatique pour véhicule, selon la revendication 8 ou la revendication 9, caractérisé par le fait que les courts segments d'entailles (10b) possèdent une longueur comprise entre 15 et 40 % et représentant, notamment, environ 30 % de la longueur des segments d'entailles longs (10a).

11. Bandage pneumatique pour véhicule, selon l'une des revendications 1 à 6, caractérisé par le fait que la rangée de blocs d'épaulement (1') présente, dans la région extérieure (A) de bande de roulement, de minces entailles (10') préférentiellement de configuration ondulée ou en zigzag, se composant d'un alignement de plusieurs structures ondulées ou en zigzag qui, considérées chacune individuellement, sont au moins pour l'essentiel symétriques, les minces entailles s'étendant globalement, en particulier au moins pour l'essentiel, dans la direction transversale du profil.

12. Bandage pneumatique pour véhicule, selon l'une des revendications 1 à 11, caractérisé par le fait que le même type de minces entailles est disposé, à chaque fois, dans les structures profilées de la région intérieure (I) de bande de roulement et dans les structures profilées de la région extérieure (A) de bande de roulement.
